# EUROPEAN PATENT APPLICATION

(11) **EP 4 582 929 A1**
(43) Date of publication of application: **09.07.2025**
(21) Application number: 23897971.0
(22) Date of filing: 13.07.2023
(51) Int. Cl.: G06F 3/16, G11B 20/10, G10L 25/51, H04R 1/10, G06F 3/041, H04W 4/80, G06F 1/16

(54) **HEARABLE DEVICE AND PORTABLE ELECTRONIC DEVICE FOR PERFORMING SOUND-RELATED FUNCTION**

(30) Priority: 28.11.2022 KR 20220161301; 07.12.2022 KR 20220169295
(71) Applicant: Samsung Electronics Co., Ltd., Suwon-si, Gyeonggi-do 16677 (KR)
(72) Inventor: MYUNG, Insik, Suwon-si, Gyeonggi-do 16677 (KR); KWON, Jihye, Suwon-si, Gyeonggi-do 16677 (KR); OH, Jungyeob, Suwon-si, Gyeonggi-do 16677 (KR); LEE, Joayoung, Suwon-si, Gyeonggi-do 16677 (KR)
(74) Representative: HGF
(86) International application number: PCT/KR2023/010002
(87) International publication number: WO 2024/117434

(57) **Abstract**

Provided may be a hearable device and portable electronic device configured to execute given functions (e.g., recording, searching, bookmarking) on the basis of whether or not an ambient sound listening function is running on the hearable device and/or whether or not a user has worn the hearable device. The hearable device may be earphones or a headset that may be wirelessly connected to the portable electronic device. The portable electronic device may be, for example, a smartphone as an electronic device that may be wirelessly connected to the hearable device, or a head mounted display (HMD) as a wearable device.

## Description

### [Technical Field]

Various embodiments relate to a hearable device and a portable electronic device configured to perform a sound-related function.

### [Background Art]

A portable electronic device (e.g., a smartphone) may be connected to a hearable device (e.g., earphones or a headset) through a communication circuit configured to support short-range wireless communication (e.g., Bluetooth). The portable electronic device may receive a user input from the connected hearable device through the communication circuit. The portable electronic device may perform a sound-related function, based on the received user input.

### [Disclosure of Invention]

### [Technical Problem]

A hearable device may perform an ambient sound listening function that enables a user to hear surrounding sounds. For example, an audio signal received through a microphone provided in the hearable device may be output through a speaker of the hearable device. The hearable device may include an input device for receiving a user input from a portable electronic device. The user may control the portable electronic device by using the input device. For example, the user input may be provided to the portable electronic device through a button provided in the hearable device, thereby playing or pausing music. In addition to such a function, the portable electronic device which may provide various functions to the user depending on whether the ambient sound listening function is being executed and/or whether the hearable device is worn is required.

Various embodiments may provide a user with a hearable device and a portable electronic device configured to execute various functions depending on whether an ambient sound listening function is being executed and/or whether the hearable device is worn. Here, the hearable device may be earphones or a headset which can be wirelessly connected to the portable electronic device. The portable electronic device may be an electronic device which can be wirelessly connected to the hearable device, for example, a smartphone or a head mounted display (HMD) as a wearable device. The technical task to be achieved in the disclosure may not be limited to the above-mentioned technical tasks, and other technical tasks not mentioned may be clearly understood, through the following descriptions, by those skilled in the art to which the disclosure belongs.

### [Solution to Problem]

According to an embodiment, a portable electronic device may include: a display configured to generate an input signal in response to a user's touch; a wireless communication circuit; a processor operatively connected to the display and the wireless communication circuit; and a memory operatively connected to the processor. The memory may store instructions that, when executed, cause the processor to receive a user input from a hearable device through the display or the wireless communication circuit. The instructions may cause the processor to, based on reception of the user input, determine whether the hearable device is worn, by using a detection signal received from the hearable device through the wireless communication circuit. The instructions may cause the processor to perform a first function on an audio signal received from the hearable device through the wireless communication circuit, based on that the hearable device is not worn or based on identifying that the hearable device is worn and an ambient sound listening function which outputs an audio signal acquired from a microphone of the hearable device to a speaker of the hearable device is being performed. The instructions may cause the processor to perform a second function on an audio signal being played through the hearable device, based on identifying that the hearable device is worn and the ambient sound listening function is not being performed.

According to an embodiment, a hearable device may include a microphone; a speaker; a sensor; an input device; a wireless communication circuit; and a control circuit connected to the microphone, the speaker, the sensor, the input device, and the wireless communication circuit. The control circuit may be configured to receive a user input from a portable electronic device through the input device or the wireless communication circuit. The control circuit may be configured to, based on reception of the user input, determine whether the hearable device is worn, by using a detection signal received from the sensor. The control circuit may be configured to perform a first function on an audio signal acquired from the microphone, based on that the hearable device is not worn or based on identifying that the hearable device is worn and an ambient sound listening function which outputs an audio signal acquired from the microphone to the speaker is being performed. The control circuit may be configured to perform a second function on an audio signal received from the wireless communication circuit and being played through the speaker, based on identifying that the hearable device is worn and the ambient sound listening function is not being performed.

According to an embodiment, a method of operating a portable electronic device may include an operation of receiving a user input from a hearable device through a touch-sensitive display of the portable electronic device or a wireless communication circuit of the portable electronic device. The method may include an operation of, based on reception of the user input, determining whether the hearable device is worn, by using a detection signal received from the hearable device through the wireless communication circuit. The method may include an operation of performing a first function on an audio signal received from the hearable device through the wireless communication circuit, based on that the hearable device is not worn or based on identifying that the hearable device is worn and an ambient sound listening function which outputs an audio signal acquired from a microphone of the hearable device to a speaker of the hearable device is being performed. The method may include an operation of performing a second function on an audio signal being played through the hearable device, based on identifying that the hearable device is worn and the ambient sound listening function is not being performed.

### [Advantageous Effects of Invention]

According to various embodiments, a portable electronic device and a hearable device may execute various functions depending on whether an ambient sound listening function is being executed and/or whether the hearable device is worn. In addition to this, various effects directly or indirectly identified through this document may be provided.

### [Brief Description of Drawings]

FIG. 1 is a block diagram of an electronic device in a network environment according to various embodiments.
FIG. 2 is a block diagram of an audio module according to various embodiments.
FIGS. 3A, 3B, and 3C illustrate a headset applicable to a system for supporting sound capture.
FIG. 4 illustrates a configuration of a system for supporting sound capture according to an embodiment.
FIG. 5 is a flowchart illustrating operations for sound capture in a portable electronic device according to an embodiment.
FIG. 6 is a flowchart illustrating operations for sound capture in a hearable device according to an embodiment.
FIGS. 7A and 7B illustrate an example of a configuration menu which allows a user to configure an ambient sound listening function.
FIG. 8 is a flowchart illustrating operations for sound capture in a portable electronic device according to an embodiment.
FIG. 9 illustrates an example of a call screen.
FIG. 10 illustrates an example of an execution screen of a search application on a portable electronic device.
FIG. 11 illustrates an example of an execution screen of a recording application on a portable electronic device.
FIG. 12 illustrates an example of an execution screen of a music playback application on a portable electronic device.
FIG. 13 illustrates an example of an execution screen of a video playback application on a portable electronic device.
FIG. 14 illustrates an example of a bookmark list and an execution screen of a playback application.

### [Mode for the Invention]

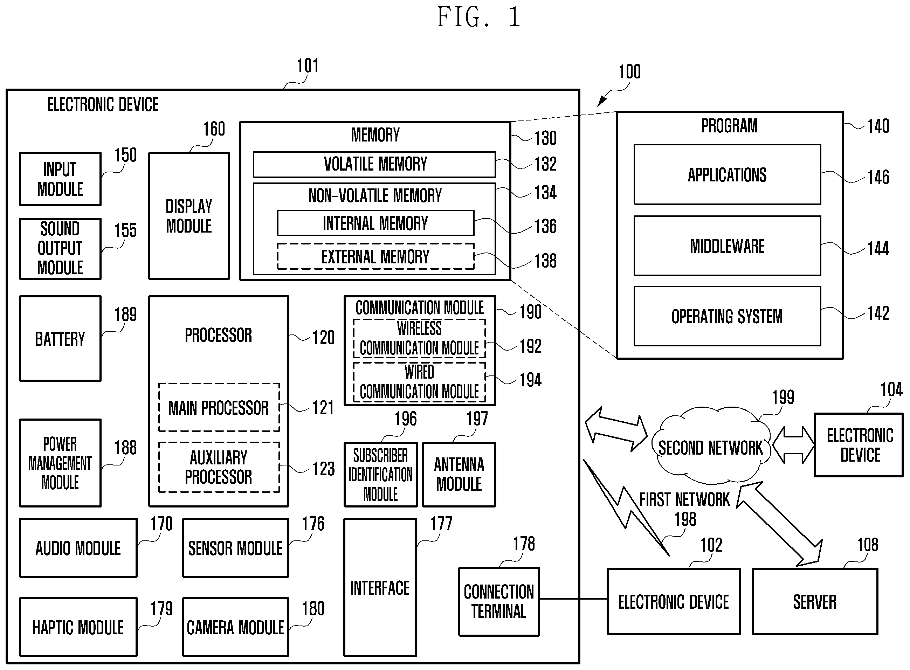

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

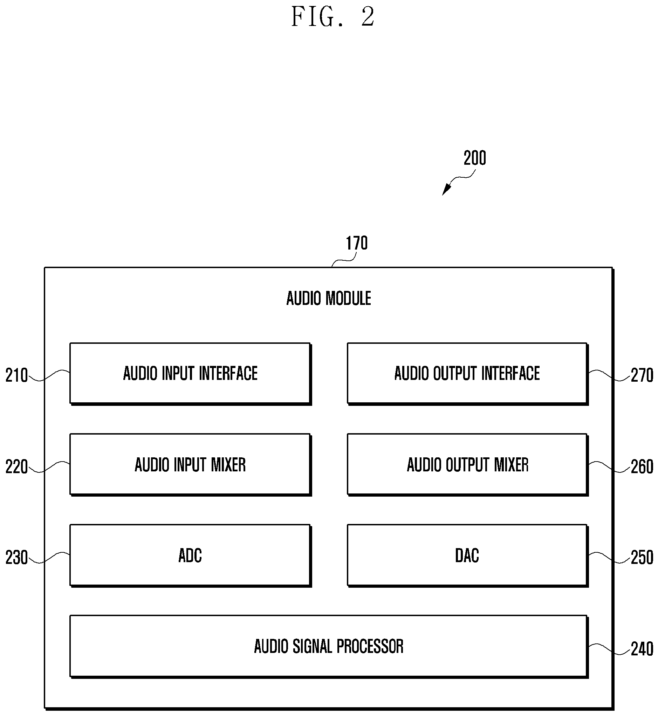

Fig. 2 is a block diagram 200 illustrating the audio module 170 according to various embodiments. Referring to Fig. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to, " "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

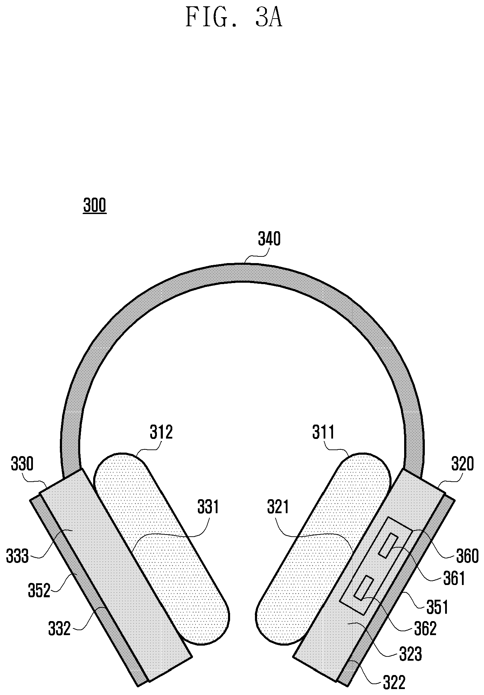

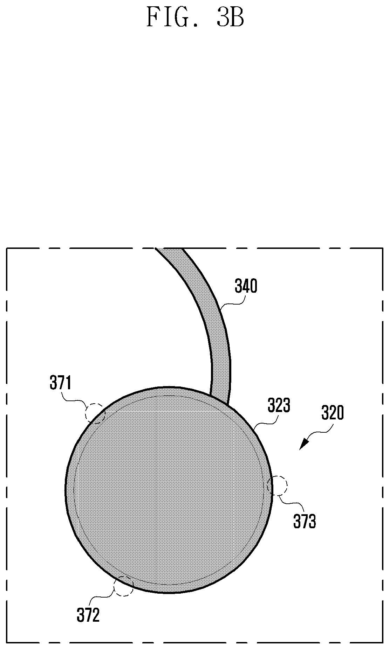

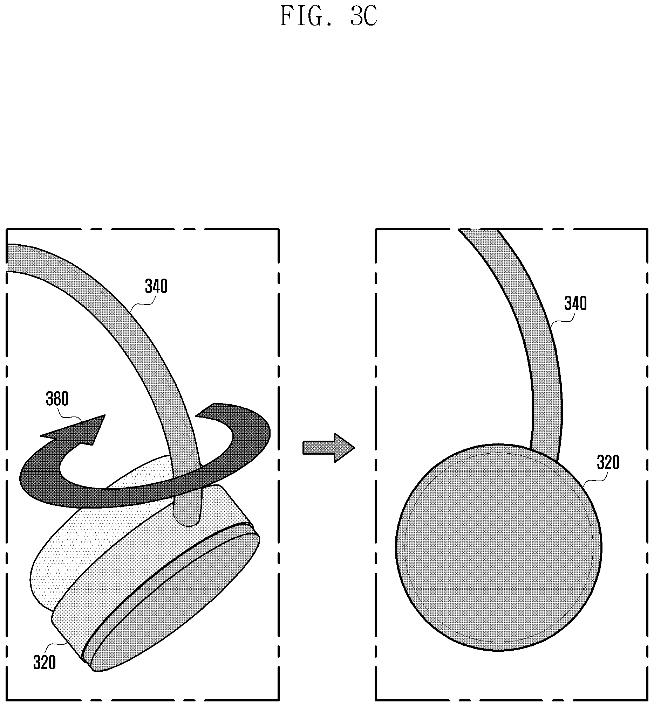

FIGS. 3A, 3B, and 3C illustrate a headset 300 applicable to a system for supporting sound capture.

Referring to FIG. 3, a headset (or headphone) 300 may be configured to include a first ear cup (in other words, an ear pad) 311 configured to surround a left ear, a second ear cup 312 configured to surround a right ear, a first housing 320 to which the first ear cup 311 is attached, a second housing 330 to which the second ear cup 312 is attached, and a hair band 340 configured to support the first housing 320 and the second housing 330 and have elasticity. The first ear cup 311 and the second ear cup 312 may be attached to a first inner surface 321 of the first housing 320 and a second inner surface 331 of the second housing 330, respectively. A first touch pad 351 and a second touch pad 352 for receiving a user input may be formed on a first outer surface 322 of the first housing 320 and a second outer surface 332 of the second housing 330, respectively. The first touch pad 351 and the second touch pad 352 may be configured to output, in response to a user input (touch) on the corresponding outer surface, an electrical input signal corresponding to the user input to an electrical circuit (e.g., a control circuit or a communication circuit) configured inside the first housing 320 and/or the second housing 330. In the first housing 320, a keypad 360 for receiving a user input may be formed on a first lateral surface 323 surrounding an internal space formed between the first inner surface 321 and the first outer surface 322. The keypad 360 may be configured by one or more keys 361 and 362. The keypad 360 may be configured to output, in response to a user input (key press), an electrical input signal corresponding to the user input to an electrical circuit (e.g., a control circuit or a communication circuit) configured inside the first housing 320 and/or the second housing 330. Although not shown, in the second housing 330, a keypad may be formed on a second lateral surface 333 surrounding an internal space formed between the second inner surface 331 and the second outer surface 332. A battery for supplying power to a load (e.g., a microphone, a speaker, a sensor, a communication circuit, or a control circuit) may be disposed in an internal space of the first housing 320 and/or the second housing 330. Inside the hair band 340, a conductive wire (e.g., a power line or a data line) which connects the electrical circuit configured inside the first housing 320 and the electrical circuit configured inside the second housing 330 may be configured.

A plurality of microphone holes may be formed on the first lateral surface 323 and the second lateral surface 333, and microphones corresponding to the microphone holes, respectively, may be included in the internal spaces of the first housing 320 and the second housing 330. For example, referring to FIG. 3B, a plurality of microphone holes 371, 372, and 373 may be formed on the first lateral surface 323. Microphones corresponding to the microphone holes 371, 372, and 373, respectively, may be positioned adjacent to the microphone holes 371, 372, and 373 in the internal space of the first housing 320. The microphones may be configured to receive sound waves through the microphone holes, convert the sound waves into an electrical audio signal, and output the signal to an electrical circuit (e.g., an audio module, a control circuit, or a communication circuit). At least one of the microphones provided in the housings 320 and 330 may be used for supporting noise canceling and/or voice calls.

Although not shown, a first hinge assembly which connects the hair band 340 and the first housing 320 so that the first housing 320 is rotatable with respect to the hair band 340 may be included in the headset 300. A second hinge assembly which connects the hair band 340 and the second housing 330 so that the second housing 330 is rotatable with respect to the hair band 340 may be included in the headset 300. For example, when a rotational force 380 is applied to the first housing 320, the first housing 320 may be rotated by the first hinge assembly as illustrated in FIG. 3C. The first hinge assembly and the second hinge assembly may be configured to have a resistance to rotation. When a rotational force exceeding a resistance is applied to the first housing 320 and the second housing 330, the first housing 320 and the second housing 330 may rotate. A speaker hole may be formed in the first inner surface 321 and the second inner surface 331, and speakers corresponding to speaker holes, respectively, may be included in the internal spaces of the first housing 320 and the second housing 330.

According to an embodiment, at least one of the microphones provided in the headset 300 may be used as an audio input device for sound capture. The touch pads 351 and 352 and/or the keypad 360 may be used as user input devices for receiving a user input which triggers sound capture.

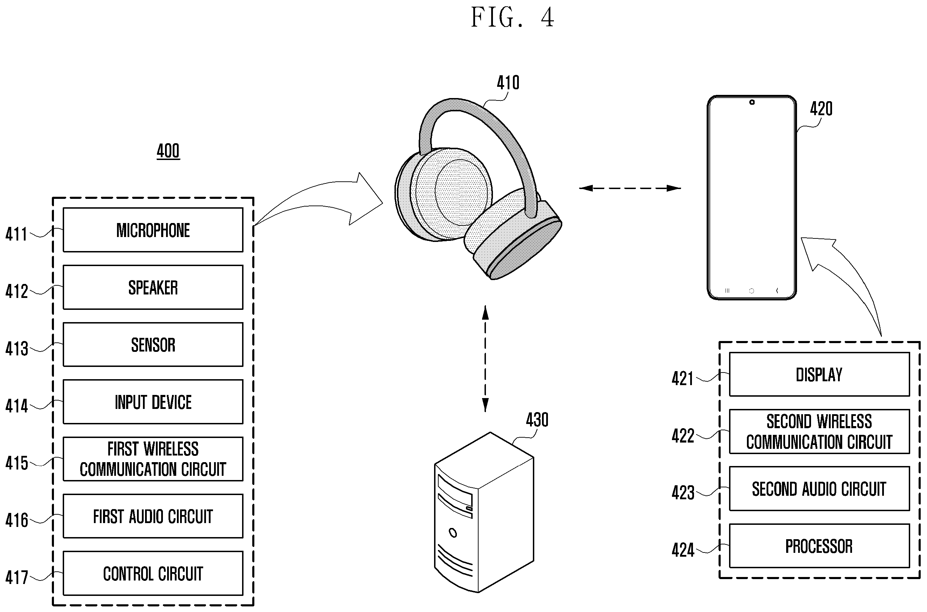

FIG. 4 illustrates a configuration of a system 400 for supporting sound capture according to an embodiment.

Referring to FIG. 4, the system 200 for supporting sound capture may include a hearable device 410 (e.g., earphones or a headset), a portable electronic device 420 (e.g., a smartphone), and a server 430 (e.g., a cloud server). The hearable device 410 may be wirelessly connected to the portable electronic device 420 via a first network (e.g., the first network 198 of FIG. 1) which supports short-range wireless communication. The hearable device 410 may also be wiredly connected to the portable electronic device 420 through a connector (e.g., an audio connector). The hearable device 410 may be wirelessly connected to the server 430 via a second network (e.g., the second network 199 of FIG. 1) which supports long-distance wireless communication.

In the system 200, the hearable device 410 (e.g., the headset 300 of FIG. 3) may include a microphone 411, a speaker 412, a sensor 413, an input device 414, a first wireless communication circuit 415, a first audio circuit 416, and a control circuit 417.

The first wireless communication circuit 415 may include a short-range wireless communication circuit and a long-range wireless communication circuit. The short-range wireless communication circuit may include a Bluetooth communication circuit and/or a Wi-Fi communication circuit. The Bluetooth communication circuit may establish a Bluetooth communication channel corresponding to a frequency band designated to be used for Bluetooth communication among bands to be used for wireless communication with an external electronic device (e.g., the portable electronic device 420). The Bluetooth communication circuit may perform data communication with the external electronic device through the established Bluetooth communication channel. At the time of transmission, the Bluetooth communication circuit may convert a baseband signal (e.g., an input signal acquired through the input device 414 or an audio signal acquired through the microphone) acquired from the hearable device 410 into an RF signal of a Bluetooth band, and transmit the RF signal to the external electronic device through an antenna. At the time of reception, the Bluetooth communication circuit may receive an RF signal of a Bluetooth band from the external electronic device through the antenna, convert the received RF signal into a baseband signal (e.g., an audio signal), and output the baseband signal to the control circuit 417. The Wi-Fi communication circuit may establish a Wi-Fi communication channel corresponding to a frequency band designated to be used for Wi-Fi communication among bands to be used for wireless communication with an external electronic device (e.g., the portable electronic device 420). The Wi-Fi communication circuit may perform data communication with the external electronic device through the established Wi-Fi communication channel. At the time of transmission, the Wi-Fi communication circuit may convert a baseband signal (e.g., an input signal acquired through the input device 414 or an audio signal acquired through the microphone) acquired from the hearable device 410 into an RF signal of a Wi-Fi band, and transmit the RF signal to the external electronic device through an antenna. At the time of reception, the Wi-Fi communication circuit may receive an RF signal of a Wi-Fi band from the external electronic device through the antenna, convert the received RF signal into a baseband signal (e.g., an audio signal), and output the baseband signal to the control circuit 417. A long-distance wireless communication circuit may include a cellular communication circuit. The cellular communication circuit may establish a communication channel of a frequency band to be used for wireless communication with a legacy network including a second generation (2G), 3G, 4G, or long term evolution (LTE) network, and perform data communication with an external electronic device (e.g., the server 430) through the established communication channel. The cellular communication circuit may establish a communication channel of a frequency band to be used for wireless communication with a 5G network, and perform data communication with an external electronic device (e.g., the server 430) through the established communication channel. At the time of transmission, the cellular communication circuit may convert a baseband signal (e.g., an input signal acquired through the input device 414 or an audio signal acquired through the microphone) acquired from the hearable device 410 into an RF signal of a frequency band used for cellular communication, and transmit the RF signal to the external electronic device through an antenna. At the time of reception, the long-distance wireless communication circuit may acquire an RF signal of a frequency band used for cellular communication through the antenna, convert the acquired RF signal into a baseband signal, and output the baseband signal to the control circuit 417.

The control circuit (e.g., a microcontroller unit (MCU), a central processing unit (CPU), or an application processor (AP)) 417 may control the first wireless communication circuit 415 to establish a wireless communication channel (e.g., a Bluetooth communication channel) for the hearable device 410 to perform data communication with the portable electronic device 420. The control circuit 417 may receive an audio signal from the portable electronic device 420 through the first wireless communication circuit 415 and output the audio signal to the speaker 412. For example, the portable electronic device 420 may receive an audio signal from a server which supports content streaming (e.g., music streaming or video streaming) via a second network (e.g., the second network 199 of FIG. 1), and transmit the audio signal to the hearable device 410. The control circuit 417 of the hearable device 410 may receive an audio signal from the portable electronic device 420 through the first wireless communication circuit 415, and output the audio signal to the speaker 412. The speaker 412 may convert the received audio signal into sound waves and output the converted sound waves.

The control circuit 417 may receive an input signal for requesting activation of an ambient sound listening function from the portable electronic device 420 through the first wireless communication circuit 415. The control circuit 417 may also receive the input signal for requesting activation of the ambient sound listening function through the input device 414. For example, referring to FIG. 3, the first touch pad 351 may output, to the control circuit 417, a first input signal corresponding to a long touch by a user on the outer surface 322 of the first housing 320 for a predetermined period of time or longer. The second touch pad 352 may output, to the control circuit 417, a second input signal corresponding to a long touch by the user on the outer surface 332 of the second housing 330 for a predetermined period of time or longer. The control circuit 417 may recognize the first input signal and the second input signal as having a meaning that the user has requested activation of the ambient sound listening function. The control circuit 417 may transmit, to the portable electronic device 420 through the first wireless communication circuit 415, a notification signal for notifying that the ambient sound listening function has been activated, in response to the first input signal or the second input signal being received from the input device 414. The control circuit 417 may activate the microphone 411 in response to the input signal for requesting activation of the ambient sound listening function, and output an audio signal (hereinafter, a first audio signal) received from the microphone 411 to the speaker 412. When an audio signal (hereinafter, a second audio signal) is received from the portable electronic device 420, the control circuit 417 may synthesize the first audio signal and the second audio signal by using the first audio circuit 416 (e.g., the audio output mixer 260) and output the synthesized audio signal to the speaker 412.

According to an embodiment, the sensor 413 may generate a detection signal used to recognize a state of the hearable device 410. The sensor 413 may output the detection signal to the control circuit 417 or transmit the detection signal to the portable electronic device 420 through the first wireless communication circuit 415. For example, the sensor 413 may include a proximity sensor, a biometric sensor, an acceleration sensor, or an inertial movement sensor. The proximity sensor and the biometric sensor may be arranged in a part adjacent to a human body (e.g., a part of an earphone that fits into an ear or a part (e.g., the ear cups 311 or 312) of a headset that covers an ear) when the hearable device 410 is worn by the user, and may thus generate a detection signal which allows recognition of the presence of the human body around the hearable device 410. The acceleration sensor may be disposed in an internal space of a housing (e.g., the first housing 320 and/or the second housing 330) of the hearable device 410 and may generate a detection signal which allows recognition of whether the hearable device 410 is moving. The inertial movement sensor may be attached to the first hinge assembly and/or the second hinge assembly in the headset 300 and may generate a detection signal used to recognize an angle of the first housing 320 and/or the second housing 330.

According to an embodiment, the control circuit 417 may receive a user input signal for requesting the performance of sound capture through the input device 414 (e.g., the first touch pad 351, the second touch pad 352, or the keypad 360), and transmit the input signal to the portable electronic device 420 through the first wireless communication circuit 415. The control circuit 417 may also receive a user input signal for requesting the performance of sound capture from the portable electronic device 420 through the first wireless communication circuit 415. The control circuit 417 may activate the sensor 413 in response to receiving the input signal. The control circuit 417 may receive a detection signal from the activated sensor 413 and transmit the detection signal to the portable electronic device 420 through the first wireless communication circuit 415. The control circuit 417 may receive a request signal for requesting an audio signal acquired from the microphone 411, as a response to transmitting the detection signal to the portable electronic device 420, from the portable electronic device 420 through the first wireless communication circuit 415. In response to receiving the request signal, the control circuit 417 may transmit an audio signal received from the microphone 411 to the portable electronic device 420 through the first wireless communication circuit 415. The portable electronic device 420 may receive an audio signal from the hearable device 410 as a response to transmitting a response signal to the hearable device 410. The portable electronic device 420 may record (e.g., compress and store the received audio signal) the received audio signal or search for content (e.g., music and video) by using the audio signal. Alternatively, the portable electronic device 420 may also perform bookmarking which adds content (e.g., music and video) corresponding to the received audio signal to a bookmark list. The operations of the control circuit 417 described above may be stored as instructions in a memory of the hearable device 410 and executed by the control circuit 417.

According to an embodiment, the control circuit 417 may receive a user input signal for requesting the performance of sound capture through the input device 414 (e.g., the first touch pad 351, the second touch pad 352, or the keypad 360) or the first wireless communication circuit 415. In response to the input signal being received, the control circuit 417 may determine whether the hearable device 410 is worn, by using a detection signal received from the sensor 413. For example, the control circuit 417 may determine whether a human body is present around the hearable device 410, based on a detection signal received from the proximity sensor or the biometric sensor. The control circuit 417 may determine that the presence of the human body indicates a wearing state. The control circuit 417 may determine that the absence of the human body indicates a non-wearing state. The control circuit 417 may determine whether there is movement of the hearable device 410, based on a detection signal received from the acceleration sensor. The control circuit 417 may identify an angle from a detection signal received from the inertial movement sensor. If there is movement of the hearable device 410 and the identified angle falls within a specified angle range (e.g., approximately 0 to 10 degrees), the control circuit 417 may determine that the hearable device 410 is worn. When there is movement but the identified angle falls outside the specified angle range (e.g., when the identified angle is approximately 80 to 90 degrees), the control circuit 417 may determine that the hearable device 410 is hung around a neck (non-wearing state). If there is no movement, the control circuit 417 may determine that the hearable device 410 is not worn (e.g., placed on the floor). If it is determined that the hearable device 410 is worn, the control circuit 417 may identify whether the ambient sound listening function is being executed. If the hearable device 410 is not worn or the ambient sound listening function is being executed, the control circuit 417 may perform a sound capture function (e.g., audio recording and audio-related searching) on an audio signal acquired from the microphone 411. If the hearable device 410 is worn and the ambient sound listening function is not being executed, the control circuit 417 may perform a sound capture function (e.g., recording, searching, or bookmarking) on an audio signal being played through the speaker 412. Here, the audio signal being played through the speaker 412 may be received through the first wireless communication circuit 415 from the portable electronic device 420 or a server which supports streaming of music or a video. The audio signal being played through the speaker 412 may also be acquired from an audio file stored in the memory of the hearable device 410.

According to an embodiment, when the ambient sound listening function is being executed, sound capture may be divided into recording and searching according to the type of audio signal (e.g., voice, music, and sound in a video) acquired from the microphone 411. When the ambient sound listening function is not being executed, sound capture may be divided into recording, searching, and bookmarking according to the type of audio signal (streaming music, sound in a streaming video, and an audio file stored in the hearable device 410) being played through the speaker 412. If a source of the audio signal being played through the speaker 412 is a content provider (content creator) who does not permit recording by policy, a sound capture function to be performed may be replaced with bookmarking instead of recording. The control circuit 417 may identify the type of audio signal acquired from the microphone 411 by using an artificial intelligence model. For example, the control circuit 417 may transmit an audio signal to an intelligent server which supports the artificial intelligence model, through the first wireless communication circuit 415. The control circuit 417 may receive a result value indicating the type of audio signal, as a response to transmitting the audio signal to the intelligent server, from the intelligent server through the first wireless communication circuit 415. The control circuit 417 may identify the type of audio signal being played through the speaker 412, based on the type of application being executed for audio playback. For example, the control circuit 417 may request information indicating the type of application being executed for audio playback from the portable electronic device 420 through the first wireless communication circuit 415. The control circuit 417 may receive, in response to the request, information indicating the type from the portable electronic device 420 through the first wireless communication circuit 415. When an application being executed is a music player, the control circuit 417 may recognize that the type of audio signal is music. When the application being executed is a video player, the control circuit 417 may recognize that the type of audio signal is audio being played along with a video. Based on the determination of recording through a sound capture function, the control circuit 417 may generate an audio file by compressing an audio signal into a specified format (e.g., MP3, windows media audio (WMA), or advanced audio coding (AAC)), and store the audio file in the memory of the hearable device 410. The control circuit 417 may transmit the audio file to the server 430 (or the portable electronic device 420) through the first wireless communication circuit 415 so that the audio file is stored in the server 430 (or the portable electronic device 420). The operations of the control circuit 417 described above may be stored as instructions in the memory of the hearable device 410 and executed by the control circuit 417.

According to an embodiment, the hearable device 410 may further include a light (e.g., an LED) for indicating that sound capture is being executed. For example, the light may be disposed on the first lateral surface 323 of the first housing 320 or the second lateral surface 333 of the second housing 330. The control circuit 410 may cause the light to blink while sound capture is being executed.

In the system 200, the portable electronic device 420 (e.g., the electronic device 101 of FIG. 1) may include a display 421 configured to output an input signal in response to a touch, a second wireless communication circuit 422, a second audio circuit 423, and a processor 424. The second wireless communication circuit 422 may include a short-range wireless communication circuit and a long-range wireless communication circuit. The short-range wireless communication circuit may include a Bluetooth communication circuit and/or a Wi-Fi communication circuit. The display 421, the second wireless communication circuit 422, the second audio circuit 423, and the processor 424 may be configured to be substantially the same as the display module 160, the communication module 190, the audio module 170, and the processor 120.

The processor 424 may control the second wireless communication circuit 422 so as to establish a first wireless communication channel (e.g., a Bluetooth communication channel) for the portable electronic device 420 to perform data communication with the hearable device 410. The processor 424 may control the second wireless communication circuit 422 so as to receive an audio signal through a second wireless communication channel (e.g., a Wi-Fi communication channel or a long-distance wireless communication channel). The processor 424 may control the second wireless communication circuit 422 so as to transmit an audio signal received through the second wireless communication channel to the hearable device 410 through the first wireless communication channel. The processor 424 may control the second wireless communication circuit 422 so as to generate a digital audio signal by decompressing an audio file (or video file) stored in a memory of the portable electronic device 420, convert the digital audio signal into an analog audio signal by using the second audio circuit 423 (e.g., the DAC 250), and transmit the analog audio signal to the hearable device 410 through the first wireless communication channel.

According to an embodiment, the processor 424 may receive an input signal for requesting activation of sound capture from the display 421. A menu for controlling the hearable device 410 may be included on, for example, a home screen and displayed on the display 421. For example, the processor 424 may include, in the menu, a first item for selecting whether to connect between the hearable device 410 and the portable electronic device 420, a second item for selecting whether to activate noise canceling, a third item for selecting whether to activate an ambient sound listening function, and a fourth item for selecting whether to activate sound capture, and display the menu on the display 421. When activation of the ambient sound listening function is selected by the user through the third item, the processor 424 may transmit an input signal for requesting activation of the ambient sound listening function to the hearable device 410 through the second wireless communication circuit 422. When activation of sound capture is selected by the user through the fourth item, the processor 424 may transmit an input signal for requesting activation of sound capture to the hearable device 410 through the second wireless communication circuit 422.

According to an embodiment, the processor 424 may perform a sound capture function, based on the reception of the input signal for requesting activation of sound capture through the display 421 or the second wireless communication circuit 422. The processor 424 may determine whether the hearable device 410 is worn, based on a detection signal received from the hearable device 410 through the second wireless communication circuit 422. A determination method has been described in detail in the embodiment related to the above-described operation of the control circuit 417. If it is determined that the hearable device 410 is worn, the processor 424 may identify whether the ambient sound listening function is being executed. If the hearable device 410 is not worn or the ambient sound listening function is being executed, the processor 424 may transmit a request signal for requesting an audio signal acquired from the microphone 411 to the hearable device 410 through the second wireless communication circuit 422. The processor 424 may receive an audio signal through the second wireless communication circuit 422 as a response to transmitting the request signal to the hearable device 410. The processor 424 may perform a sound capture function (e.g., recording or searching) on an audio signal acquired from the hearable device 410 through the second wireless communication circuit 422. If the hearable device 410 is worn and the ambient sound listening function is not being executed, the processor 424 may perform a sound capture function (e.g., recording, searching, or bookmarking) on an audio signal being played through the speaker 412 of the hearable device 410.

According to an embodiment, when the ambient sound listening function is being executed, sound capture may be divided into recording and searching according to the type of audio signal (e.g., voice (female or male), music, and sound in a video) acquired from the microphone 411. When the ambient sound listening function is not being executed, sound capture may be divided into recording, searching, and bookmarking according to the type of audio signal (streaming music, sound in a streaming video, music stored in the portable electronic device 420, and sound in a video stored in the portable electronic device 420) being played through the speaker 412. If a source of the audio signal being played through the speaker 412 is a content provider (or content creator) who does not permit recording by policy, a sound capture function to be performed may be replaced with bookmarking instead of recording. The processor 424 may identify the type of audio signal acquired from the hearable device 410 by using an artificial intelligence model. For example, a machine-learned artificial intelligence model for identifying the type of audio may be stored in a memory (e.g., the memory 130) and executed by the processor 424. The processor 424 may input an audio signal to the artificial intelligence model as an input value, and acquire information indicating the type of audio from a result value output from the artificial intelligence model. For another example, the processor 424 may transmit an audio signal to an intelligent server which supports the artificial intelligence model, through the second wireless communication circuit 422. The processor 424 may receive a result value indicating the type of audio signal, as a response to transmitting the audio signal to the intelligent server, from the intelligent server through the second wireless communication circuit 422. The processor 424 may identify the type of audio signal being played through the hearable device 410, based on the type of application being executed for audio playback. When an application being executed is a music player, the processor 424 may recognize that the type of audio signal is music. When the application being executed is a video player, the processor 424 may recognize that the type of audio signal is audio being played along with a video. Based on the determination of recording through a sound capture function, the processor 424 may generate an audio file by compressing an audio signal into a specified format (e.g., MP3, windows media audio (WMA), or advanced audio coding (AAC)), and store the audio file in the memory of the portable electronic device 420. The processor 424 may transmit the audio file to the server 430 through the second wireless communication circuit 422 so that the audio file is stored in the server 430. The operations of the processor 424 described above may be stored as instructions in the memory of the portable electronic device 420 and executed by the processor 424.

According to an embodiment, the portable electronic device 420 may be a head mounted display (HMD) device which is wearable on a user's face and implements augmented reality (AR), virtual reality (VR), mixed reality (MR) that is a mixture of augmented reality and virtual reality, or extended reality (XR). One type of an HMD device is an optical see-through (OST) device. The OST device may be configured to allow external light to reach the user's eyes through glass when worn. One type of an HMD device is a video see-through (VST) device. When worn, the VST device may be configured to allow light emitted from the display to reach the user's eyes, but block external light so that the external light does not reach the user's eyes. The OST device and the VST device may be collectively referred to as mixed reality (MR) devices.

In the above-described descriptions related to FIGS. 3 and 4, the prefixes "first", "second", "third", and the like are only for distinguishing the same names and are not given any special meaning such as importance or order.

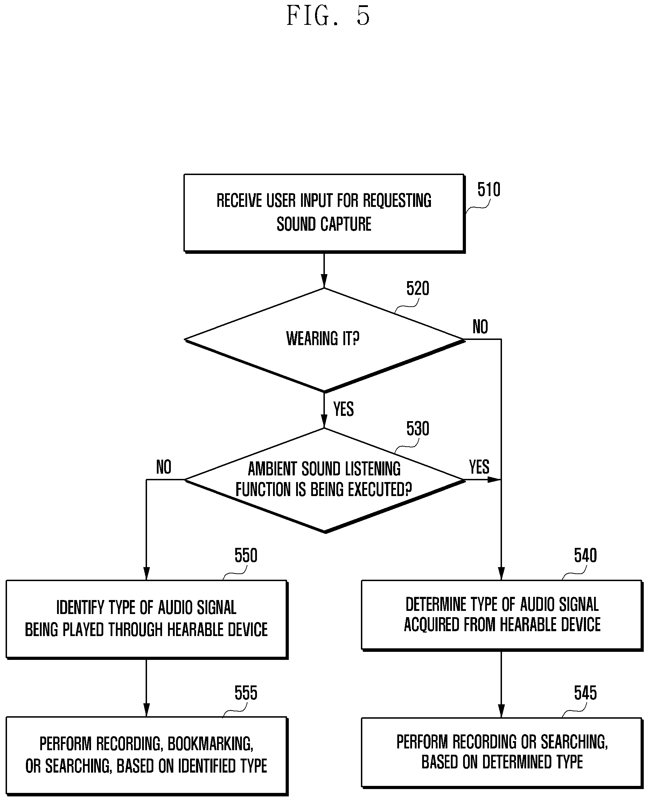

FIG. 5 is a flowchart illustrating operations for sound capture in the portable electronic device 420 according to an embodiment.

In operation 510, the processor 424 may receive a user input for requesting sound capture. As an example, the processor 424 may display, on the display 421, a graphical user interface (GUI) including a button for starting and ending sound capture. The processor 424 may recognize that a user has requested the start of sound capture through the GUI. As another example, the processor 424 may receive an input signal for requesting sound capture from the hearable device 410 through the second wireless communication circuit 422. Referring to FIG. 3, the keypad 360 may output a first input signal corresponding to the keys 361 and 362 being simultaneously pressed by the user to the control circuit 417. The control circuit 417 may transmit the first input signal to the portable electronic device 420 through the first wireless communication circuit 415. The first touch pad 351 may output, to the control circuit 417, a second input signal corresponding to a touch gesture made by the user on the outer surface 322 of the first housing 320 from an edge of the outer surface 322 to the opposite edge thereof. The control circuit 417 may transmit the second input signal to the portable electronic device 420 through the first wireless communication circuit 415. The second touch pad 352 may output, to the control circuit 417, a third input signal corresponding to a touch gesture made by the user on the outer surface 332 of the second housing 330 from an edge of the outer surface 332 to the opposite edge thereof. The control circuit 417 may transmit the third input signal to the portable electronic device 420 through the first wireless communication circuit 415. The processor 424 of the portable electronic device 420 may recognize the first input signal, the second input signal, and the third input signal as a request for sound capture. In addition to the user input described above, other interaction methods may be designated as an input for requesting sound capture. For example, a long touch on the first touch pad 351 or the second touch pad 352 for a specified period of time or longer may be designated as an input for requesting sound capture.

In operation 520, in response to receiving the user input, the processor 424 may determine whether the hearable device 410 is worn, by using a detection signal received from the hearable device 410 through the second wireless communication circuit 422. A determination method has been described in detail in the embodiment related to the above-described operation of the control circuit 417.

If it is determined that the hearable device is worn, in operation 530, the processor 424 may identify whether an ambient sound listening function is being executed in the hearable device 410. For example, the processor 424 may identify whether the ambient sound listening function is being executed, based on reception of a notification signal from the hearable device 410 through the second wireless communication circuit 422 to identify whether the ambient sound listening function is activated. As another example, the processor 424 may display, on the display 421, a GUI including a button for starting and ending ambient sound listening. The processor 424 may recognize that the user has requested to start or end ambient sound listening through the GUI.

If it is determined that the hearable device 410 is not worn or it is determined that the ambient sound listening function is being executed in the hearable device 410, the processor 424 may determine the type of audio signal acquired from the hearable device 410 in operation 540. As described above, an artificial intelligence model may be used to determine the type of audio signal. In operation 545, the processor 424 may perform recording or searching on an audio signal acquired from the hearable device 410, based on the determined type. When the type of the audio signal is voice, the processor 424 may record the audio signal. When the type of the audio signal is music or sound in a video, the processor 424 may perform searching on the audio signal. For example, the processor 424 may transmit the audio signal to the server 430 through the second wireless communication circuit 422, and thus request the server 430 to provide information related to the audio signal. In response to the request, the processor 424 may receive the related information and display the information through the display 421.

If it is determined that the hearable device 410 is worn and the ambient sound listening function is not being executed in the hearable device, the processor 424 may identify the type of audio signal being played through the hearable device 410 in operation 550. In operation 555, the processor 424 may perform recording, bookmarking, or searching on the audio signal being played through the hearable device 410, based on the identified type. When the type of the audio signal is music, the processor 424 may record the audio signal. When the type of the audio signal is music and a source of the audio signal is a content provider (or content creator) who does not permit recording by policy, the processor 424 may perform bookmarking on the audio signal instead of recording. For example, the processor 424 may transmit a request signal for requesting to add a corresponding music to a bookmark list to a music streaming server through the second wireless communication circuit 422. The processor 424 may display, on the display 421, a notification that enables the user to recognize that the music has been added to the bookmark list. Whether recording is allowed may be defined in metadata of the audio signal. For example, the processor 424 may receive metadata about streaming music from the music streaming server through the second wireless communication circuit 422. The processor 424 may identify whether recording of the streaming music is allowed in the received metadata. When the type of the audio signal is sound in a video, the processor 424 may perform searching on the audio signal. For example, the processor 424 may transmit the audio signal to a server which supports content search, through the second wireless communication circuit 422, and thus request the server to provide information related to the audio signal. In response to the request, the processor 424 may receive the related information from the server through the second wireless communication circuit 422 and display the information through the display 421.

According to an embodiment, while sound capture is being performed, the processor 424 may display a message indicating that sound capture is being performed, on the display 421, for example, through a pop-up window. When sound capture is recording, the processor 424 may display a pop-up window including a recording time on the display 421. The processor 424 may control the hearable device 410 to display that sound capture is being performed. For example, the control circuit 417 in the hearable device 410 may cause a light (e.g., an LED) to blink in response to a request from the processor 424.

According to an embodiment, while recording is being performed as sound capture, the processor 424 may receive an input signal (e.g., the first input signal, the second input signal, or the third input signal exemplified in relation to operation 510) from the hearable device 410 through the second wireless communication circuit 422. The processor 424 may recognize the received input signal as a user input for requesting the end of the recording, and end the recording. The processor 424 may receive a user input for requesting the end of the recording through a GUI displayed on the display 421, and end the recording accordingly. When a function (e.g., bookmarking or searching) related to sound capture is completed, sound capture may be automatically ended.

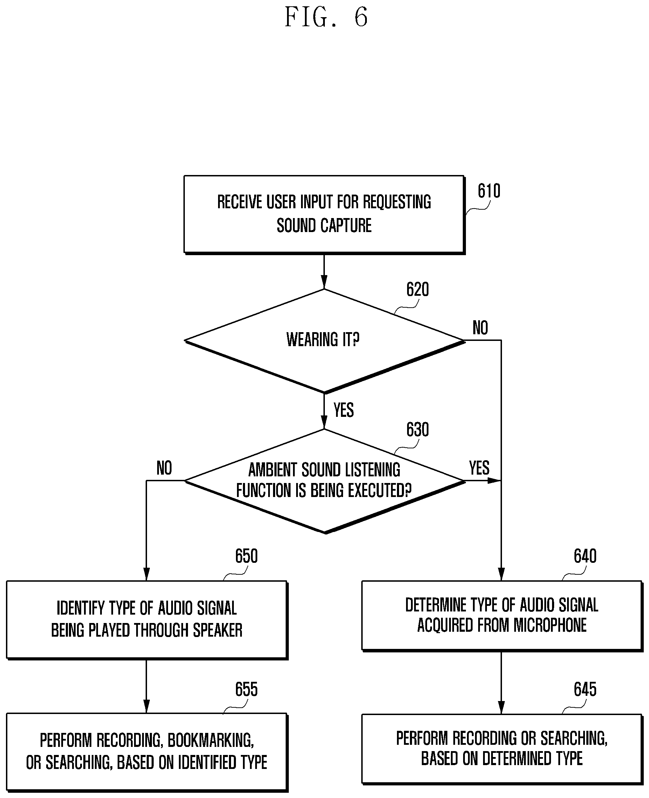

FIG. 6 is a flowchart illustrating operations for sound capture in the hearable device 410 according to an embodiment.

In operation 610, the control circuit 417 may receive a user input for requesting sound capture. The control circuit 417 may receive, from the input device 414, an input signal for requesting sound capture. For example, the keypad 360 may output a first input signal corresponding to the keys 361 and 362 being simultaneously pressed by a user to the control circuit 417, and the control circuit 417 may recognize the first input signal as a request for sound capture. As another example, the first touch pad 351 may output, to the control circuit 417, a second input signal corresponding to a touch gesture made by the user on the outer surface 322 of the first housing 320 from an edge of the outer surface 322 to the opposite edge thereof, and the control circuit 417 may recognize the second input signal as a request for sound capture. As another example, the second touch pad 352 may output, to the control circuit 417, a third input signal corresponding to a touch gesture made by the user on the outer surface 332 of the second housing 330 from an edge of the outer surface 332 to the opposite edge thereof, and the control circuit 417 may recognize the third input signal as a request for sound capture. The control circuit 417 may also receive an input signal for requesting sound capture from the portable electronic device 420 through the first wireless communication circuit 415.

In operation 620, in response to receiving the user input, the control circuit 417 may determine whether the hearable device 410 is worn, by using a detection signal received from the sensor 413. A determination method has been described in detail in the embodiment related to the above-described operation of the control circuit 417.

If it is determined that the hearable device is worn, in operation 630, the control circuit 417 may identify whether an ambient sound listening function which outputs an audio signal acquired from the microphone 411 to the speaker 412 is being executed.

If it is determined that the hearable device 410 is not worn or it is identified that the ambient sound listening function is being executed in the hearable device 410, the control circuit 417 may determine the type of audio signal acquired from the microphone 411 in operation 640. As described above, an artificial intelligence model may be used to determine the type of the audio signal. In operation 645, the control circuit 417 may perform recording or searching on the audio signal acquired from the microphone 411, based on the determined type. When the type of the audio signal is voice, the control circuit 417 may record the audio signal. The control circuit 417 may store an audio file generated as a result of the recording in the memory of the hearable device 410. Additionally or alternatively, the control circuit 417 may transmit the audio file to the server 430 (or the portable electronic device 420) through the first wireless communication circuit 415 so that the audio file is stored in a storage of the server 430 (or the memory of the portable electronic device 420). When the type of the audio signal is music or sound in a video, the control circuit 417 may perform searching on the audio signal. For example, the control circuit 417 may transmit the audio signal to the portable electronic device 420 through the first wireless communication circuit 415, and thus request the portable electronic device 420 to search for information. The processor 424 of the portable electronic device 420 may transmit an audio signal received from the hearable device 410 to the server 430 through the second wireless communication circuit 422, and thus request the server 430 to provide information related to the audio signal. In response to the request, the processor 424 may receive the related information and display the information through the display 421.

If it is identified that the hearable device 410 is worn and the ambient sound listening function is not being executed in the hearable device 410, the control circuit 417 may identify the type of audio signal being played through the speaker 412 in operation 650. Here, the audio signal being played through the speaker 412 may be received by the hearable device 410 from the portable electronic device 420 (or a music streaming server) through the first wireless communication circuit 415 or may be acquired from the audio file stored in the memory of the hearable device 410. In operation 655, the control circuit 417 may perform recording, bookmarking, or searching on the audio signal being played through the speaker 412, based on the identified type. When the type of the audio signal being played is music and the audio signal being played is received from the portable electronic device 420 or a streaming music server through the first wireless communication circuit 415, the control circuit 417 may perform recording on the audio signal. The control circuit 417 may store an audio file generated as a result of the recording in the memory of the hearable device 410. Additionally or alternatively, the control circuit 417 may transmit the audio file to the server 430 (or the portable electronic device 420) through the first wireless communication circuit 415 so that the audio file is stored in a storage of the server 430 (or the memory of the portable electronic device 420). When the type of the audio signal is music and a source of the audio signal is a content provider (or content creator) who does not permit recording by policy, the control circuit 417 may perform bookmarking on the audio signal instead of recording. For example, if the audio signal is received from the portable electronic device 420, the control circuit 417 may transmit a request signal for requesting to add a corresponding music to a bookmark list to the portable electronic device 420 through the first wireless communication circuit 415. In the portable electronic device 420, the processor 424 may transmit the request signal to the music streaming server through the second wireless communication circuit 422. The processor 424 may display, on the display 421, a notification that enables the user to recognize that the music has been added to the bookmark list. If the audio signal is received from the music streaming server, the control circuit 417 may transmit the request signal for requesting to add the corresponding music to the bookmark list to the music streaming server through the first wireless communication circuit 415. Whether recording is allowed may be defined in metadata of the audio signal. For example, the control circuit 417 may receive metadata about streaming music from the portable electronic device 420 (or the music streaming server) through the first wireless communication circuit 415. The control circuit 417 may identify whether recording of the streaming music is allowed in the received metadata. If the audio signal being played is acquired from the audio file stored in the memory of the hearable device 410, the control circuit 417 may add the corresponding audio file to the bookmark list stored in the memory of the hearable device 410. If the type of the audio signal is sound in a video received from the portable electronic device 420, the control circuit 417 may perform searching on the audio signal. For example, the control circuit 417 may transmit a request signal for requesting a search related to the audio signal to the portable electronic device 420 through the first wireless communication circuit 415. In the portable electronic device 420, the processor 424 may transmit the audio signal to the server 430 through the second wireless communication circuit 422, and thus request the server 430 to provide information related to the audio signal. In response to the request, the processor 424 may receive the related information and display the information through the display 421.

According to an embodiment, the control circuit 417 may cause a light to blink so as to display that sound capture is being executed.

According to an embodiment, while recording is being performed as sound capture, the control circuit 417 may receive an input signal (e.g., the first input signal, the second input signal, or the third input signal exemplified in relation to operation 610) from the input device 414. The control circuit 417 may recognize the received input signal as a user input for requesting the end of the recording, and end the recording.

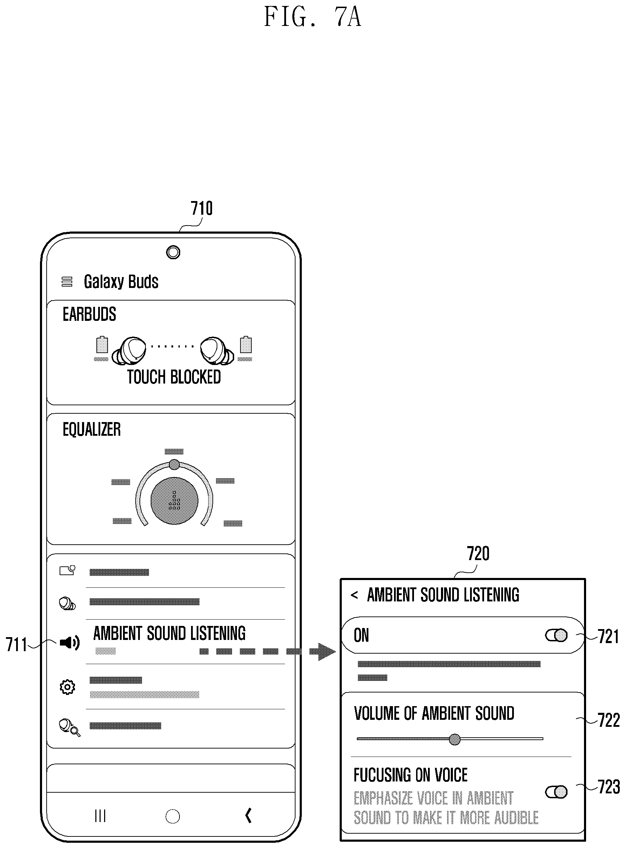

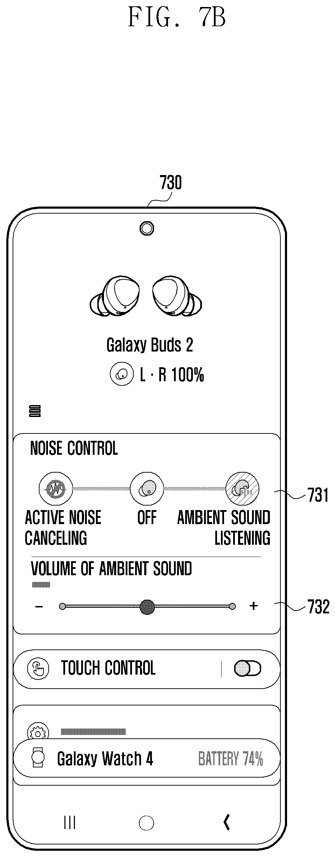

FIGS. 7A and 7B illustrate an example of a configuration menu which allows a user to configure an ambient sound listening function.

In the portable electronic device 420, the processor 424 may display, on a home screen, a GUI (e.g., a widget or an icon) for connecting with a wireless earphone (e.g., the hearable device 410). In response to a user's touch input on the GUI, the processor 424 may display, on the display 421, a configuration menu for configuring an operation of the wireless earphone connected to the portable electronic device 420. For example, in response to the user's touch input on the GUI, the processor 424 may display, on the display 421, a first configuration menu 710 of FIG. 7A including a first item 711 related to ambient sound listening. In response to the user's touch input on the first item 711, the processor 424 may display, on the display 421, a second configuration menu 720 for configuring functions related to ambient sound listening. For example, the processor 424 may include, in the second configuration menu 720, a second item 721 for allowing the user to select whether to activate ambient sound listening, a third item 722 for configuring the volume of ambient sound, and a fourth item 723 for allowing the user to select whether to focus on voice among ambient sound, and display the second configuration menu on the display 421. As another example, in response to the user's touch input on the GUI, the processor 424 may display, on the display 421, a third configuration menu 730 including a fifth item 731 for noise control (noise canceling and ambient sound listening) and a sixth item 732 for configuring the volume of ambient sound.

Ambient sound listening may also be configured through other interfaces in addition to the configuration menus exemplified above. For example, the processor 424 may receive an audio signal from a microphone (or the microphone 411 of the hearable device 410 through the second wireless communication circuit 422) provided in the portable electronic device 420 while the hearable device 410 is worn. When the received audio signal includes voice of a user designated to activate ambient sound listening, the processor 424 may activate ambient sound listening. As another example, the processor 424 may convert voice in the received audio signal into text. When the text includes a word (e.g., a user name) designated to activate ambient sound listening, the processor 424 may activate ambient sound listening. As another example, when the received audio signal includes a sound (e.g., an explosion, a gunshot, a horn, or a baby crying) corresponding to an emergency situation, the processor 424 may activate ambient sound listening.

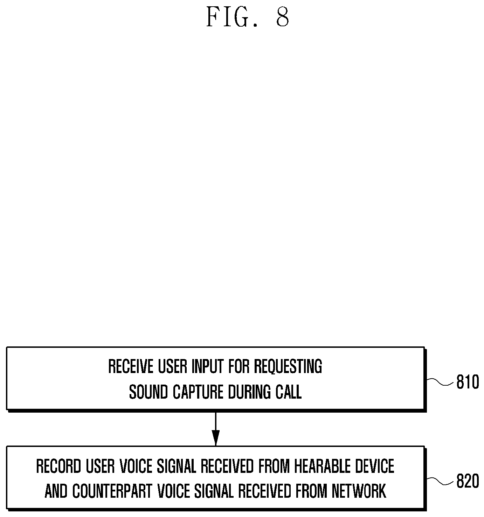

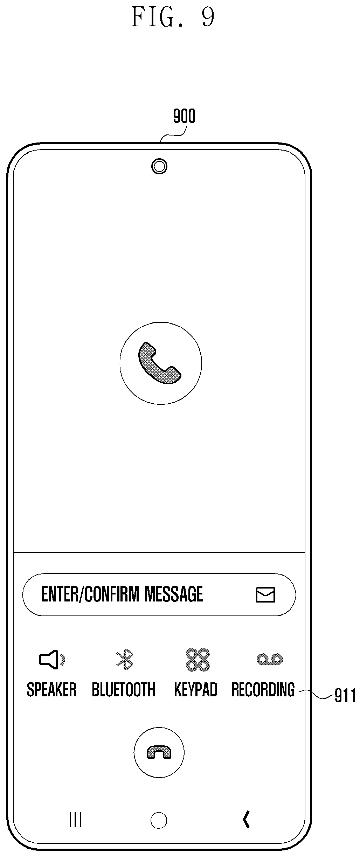

FIG. 8 is a flowchart illustrating operations for sound capture in the portable electronic device 420 according to an embodiment. FIG. 9 illustrates an example of a call screen.

The processor 424 may perform communication for a call (e.g., a voice call or a video call) with a network (e.g., a base station in the second network 199) through the second wireless communication circuit 422. The processor 424 may establish a first wireless communication channel for a call with the network through the second wireless communication circuit 422. The processor 424 may establish a second wireless communication channel (e.g., a Bluetooth communication channel) for the portable electronic device 420 to perform communication with the hearable device 410 through the second wireless communication circuit 422. The processor 424 may transmit a counterpart voice signal received from the network through the first wireless communication channel to the hearable device 410 through the second wireless communication channel. The processor 424 may transmit a user voice signal received from the hearable device 410 through the second wireless communication channel to the network through the first wireless communication channel. In operation 810, the processor 424 may receive a user input for requesting sound capture during a call. As an example, the processor 424 may display a call screen 900 including a recording button 911 on the display 421. The processor 424 may receive a user's touch input on the recording button 911. As another example, the processor 424 may receive an input signal for requesting sound capture from the hearable device 410 through the second wireless communication circuit 422.

In operation 820, the processor 424 may record a user voice signal received from the hearable device 410 and a counterpart voice signal received from the network, based on reception of the user input for requesting sound capture during a call.

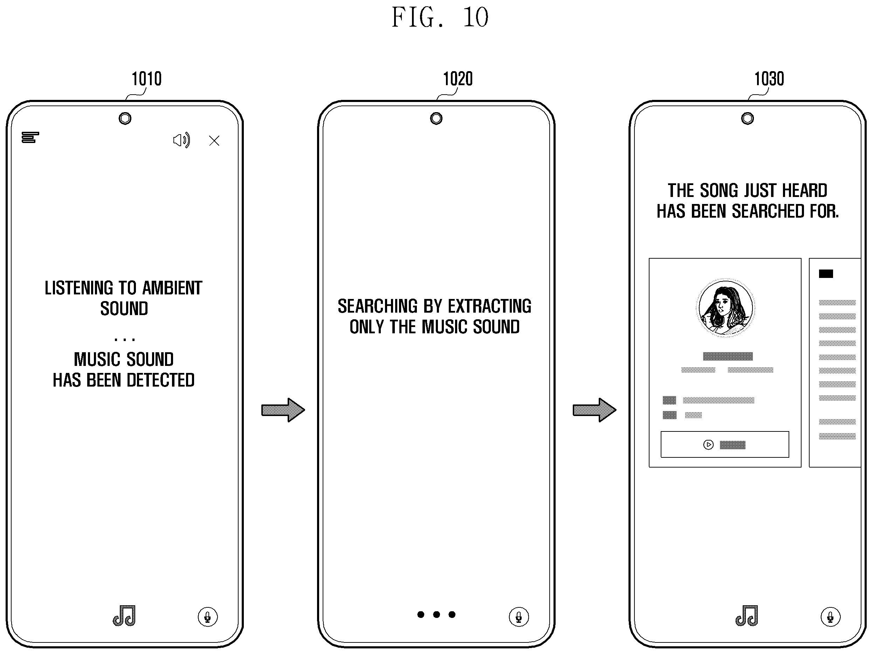

FIG. 10 illustrates an example of an execution screen of a search application on the portable electronic device 420. In the portable electronic device 420, the processor 424 may detect that an audio signal received from the hearable device 410 includes music sound, and notify a user through a first execution screen 1010 that the music sound has been detected. The processor 424 may transmit the music sound through the second wireless communication circuit 422 to a server which supports music search, and thus request the server to provide information on the corresponding music. The processor 424 may notify the user through a second execution screen 1020 that a music search is being performed. In response to the search request, the processor 424 may receive the related information from the server through the second wireless communication circuit 422. The processor 424 may include the received information in a third execution screen 1030 and display the third execution screen on the display 421.

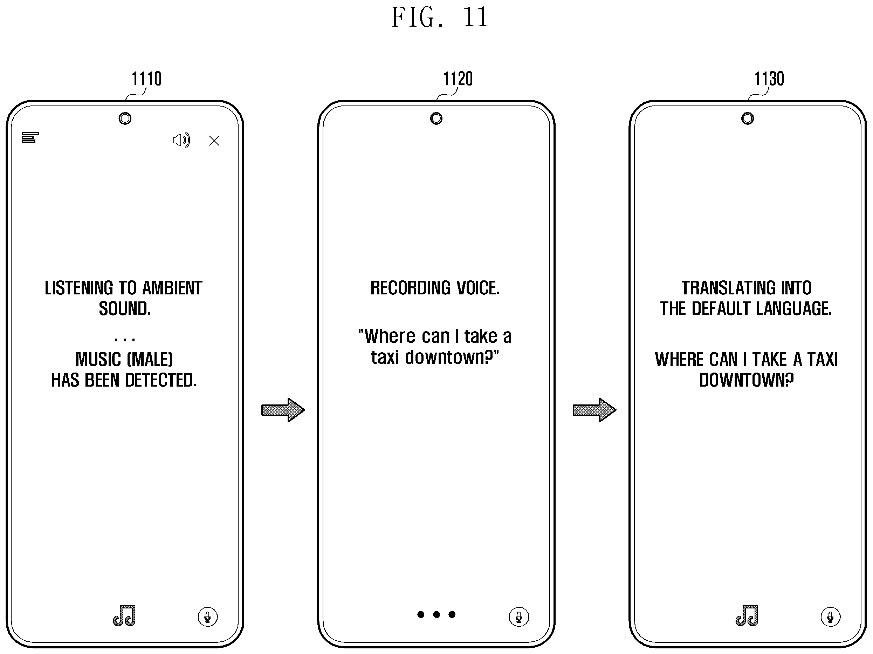

FIG. 11 illustrates an example of an execution screen of a recording application on the portable electronic device 420. In the portable electronic device 420, the processor 424 may detect that an audio signal received from the hearable device 410 includes a voice (male), and notify a user through a first execution screen 1110 that the voice (male) has been detected. The processor 424 may record the audio signal received from the hearable device 410 and notify the user through a second execution screen 1120 that recording is in progress. Additionally, the processor 424 may extract voice from the audio signal received from the hearable device 410, convert the voice into text, and display the second execution screen 1120 including the text on the display 421. Additionally, the processor 424 may recognize a language of the text. When the recognized language (e.g., English) is different from a designated default language (e.g., Korean), the processor 424 may translate the recognized language into the designated default language and display a third execution screen 1130 including a translation on the display 421.

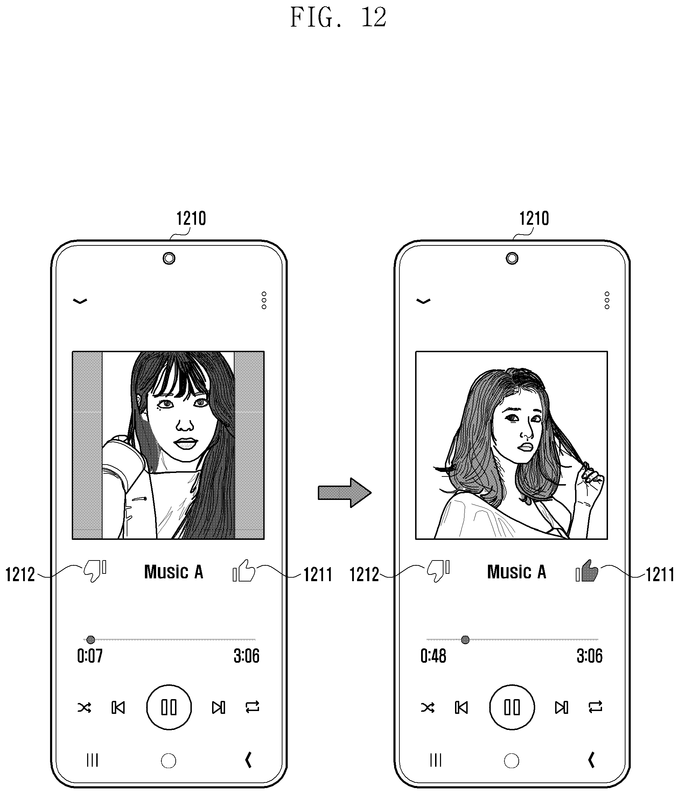

FIG. 12 illustrates an example of an execution screen of a music playback application on the portable electronic device 420.

In the portable electronic device 420, the processor 424 may receive an audio signal from a music streaming server through the second wireless communication circuit 422 (e.g., a Wi-Fi communication circuit or a cellular communication circuit) and transmit the received audio signal to the hearable device 410 through the second wireless communication circuit 422 (e.g., a Bluetooth communication circuit), so as to play streaming audio through the hearable device 410. Referring to FIG. 12, the processor 424 may display information related to an audio signal being played on the display 421 through an execution screen 1210. While an audio signal is being streamed (played in real time) from the hearable device 410, the processor 424 may perform an operation (e.g., operation 550) of identifying the type of the audio signal being played. When, as a result of the identification, the type of the audio signal being played is music, the processor 424 may perform bookmarking on the audio signal being played, based on a user input for requesting sound capture. For example, the processor 424 may transmit a request signal for requesting to add a corresponding streaming music to a bookmark list (e.g., a like list) to the music streaming server through the second wireless communication circuit 422. The processor 424 may display, on the execution screen 1210, information that allows a user to recognize that the music has been added to the bookmark list. For example, the processor 424 may invert the color of a like icon 1211 to be different from the color of a dislike icon 1212. Accordingly, the user may recognize that the corresponding music is included in the like list.

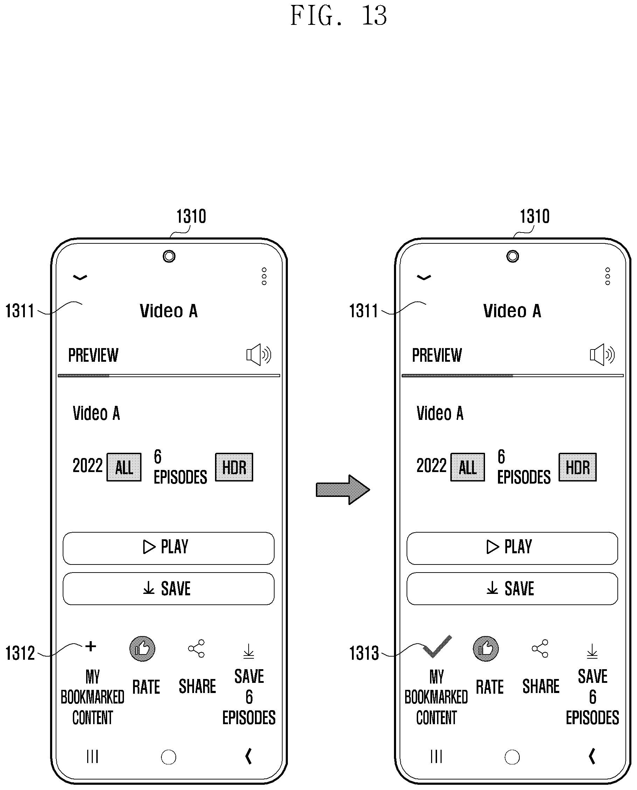

FIG. 13 illustrates an example of an execution screen of a video playback application on the portable electronic device 420.

In the portable electronic device 420, the processor 424 may receive a video signal and an audio signal from a video streaming server through the second wireless communication circuit 422 (e.g., a Wi-Fi communication circuit or a cellular communication circuit). The processor 424 may transmit the received audio signal to the hearable device 410 through the second wireless communication circuit 422 (e.g., a Bluetooth communication circuit), so as to play streaming audio through the hearable device 410. Referring to FIG. 13, the processor 424 may display an execution screen 1310 of a video playback application on the display 421, and play the received video signal through a partial area 1311 of the execution screen 1310. While an audio signal is being streamed (played in real time) from the hearable device 410, the processor 424 may perform an operation (e.g., operation 550) of identifying the type of audio signal being played. When, as a result of the identification, the type of the audio being signal played is audio in a video, the processor 424 may perform bookmarking on the audio signal being played, based on a user input for requesting sound capture. For example, the processor 424 may transmit a request signal for requesting to add a corresponding streaming video to a bookmark list (e.g., a list of content of interest) to the video streaming server through the second wireless communication circuit 422. The processor 424 may display, on the execution screen 1310, information that allows a user to recognize that the video has been added to the bookmark list. For example, the processor 424 may display a "√"-shaped icon 1313 instead of a "+"-shaped icon 1312. Accordingly, the user may recognize that the corresponding content has been included in the list of content of interest.

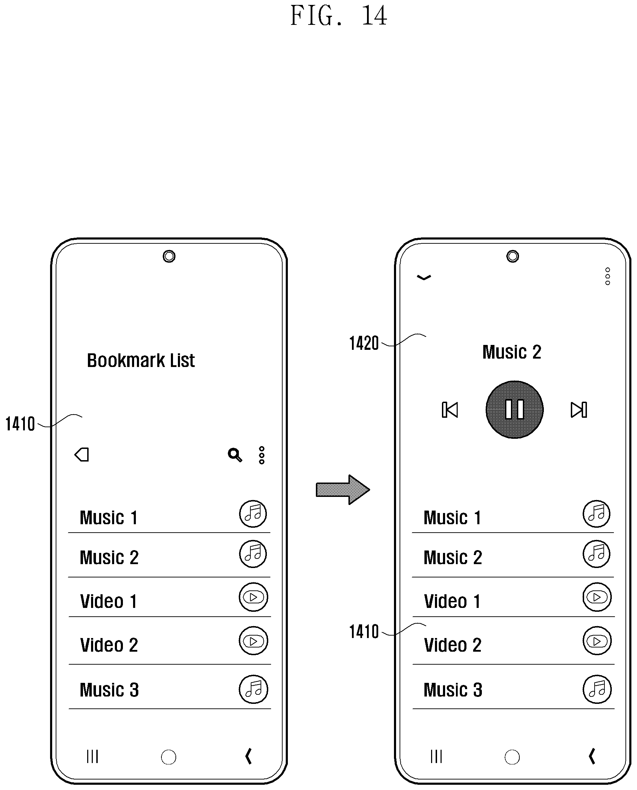

FIG. 14 illustrates an example of a bookmark list and a playback application execution screen.

While an audio signal is being streamed (played in real time) from the hearable device 410, the processor 424 may perform bookmarking on the audio signal being played, based on a user input for requesting sound capture. Referring to FIG. 14, the processor 424 may display a bookmark list 1410 on the display 421. For example, the processor 424 may receive a list of music designated as liked or of interest by a user from a streaming music server through bookmarking as illustrated in FIG. 12. The processor 424 may receive a list of videos designated as liked or of interest by the user from a streaming video server through bookmarking as illustrated in FIG. 13. The processor 424 may collect the received music list and video list into one bookmark list 1410, store the bookmark list in a memory, and display the bookmark list on the display 421. In response to the user's selection (e.g., a touch input on a corresponding item) of an item (e.g., Music 1) in the bookmark list 1410, the processor 424 may divide a display area into two areas, display the bookmark list 1410 in one area, and display an execution screen of an application for playing content corresponding to the selected item in the other area.

According to an embodiment, a portable electronic device (e.g., the portable electronic device 420 of FIG. 4) may include: a display configured to generate an input signal in response to a user's touch; a wireless communication circuit; a processor operatively connected to the display and the wireless communication circuit; and a memory operatively connected to the processor. The memory may store instructions that, when executed, cause the processor to receive a user input from a hearable device through the display or the wireless communication circuit. The instructions may cause the processor to, based on reception of the user input, determine whether the hearable device is worn, by using a detection signal received from the hearable device through the wireless communication circuit. The instructions may cause the processor to perform a first function on an audio signal received from the hearable device through the wireless communication circuit, based on determining that the hearable device is not worn or based on determining that the hearable device is worn and identifying that an ambient sound listening function which outputs an audio signal acquired from a microphone of the hearable device to a speaker of the hearable device is being performed. The instructions may cause the processor to perform a second function on an audio signal being played through the hearable device, based on determining that the hearable device is worn and identifying that the ambient sound listening function is not being executed.

The instructions may cause the processor to record the audio signal received from the hearable device, as the first function, based on determining that a type of the audio signal received from the hearable device through the wireless communication circuit is voice.

The instructions may cause the processor to search for the audio signal received from the hearable device, as the first function, based on determining that a type of the audio signal received from the hearable device through the wireless communication circuit is music.

The instructions may cause the processor to record the audio signal being played, as the second function, based on identifying that the audio signal being played through the hearable device is music.

The instructions may cause the processor to add the music to a bookmark list, as the second function, based on identifying that recording of the music is not possible.

The instructions may cause the processor to search for the audio signal being played, as the second function, based on identifying that the audio signal being played through the hearable device is sound in a video.

The instructions may cause the processor to, based on identifying that the audio signal being played through the hearable device is music, add the music to a bookmark list. The instructions may cause the processor to, based on identifying that the audio signal being played through the hearable device is sound in a video, add the video to the bookmark list.

The instructions may cause the processor to display the bookmark list on the display, and display, on the display, an execution screen of an application for playing music or a video selected by the user from the bookmark list.

According to an embodiment, a hearable device (e.g., the hearable device 410 of FIG. 4) may include: a microphone; a speaker; a sensor; an input device; a wireless communication circuit; and a control circuit connected to the microphone, the speaker, the sensor, the input device, and the wireless communication circuit. The control circuit may be configured to receive a user input from a portable electronic device through the input device or the wireless communication circuit. The control circuit may be configured to, based on reception of the user input, determine whether the hearable device is worn, by using a detection signal received from the sensor. The control circuit may be configured to perform a first function on an audio signal acquired from the microphone, based on determining that the hearable device is not worn or based on determining that the hearable device is worn and identifying that an ambient sound listening function which outputs an audio signal acquired from the microphone to the speaker is being performed. The control circuit may be configured to perform a second function on an audio signal received from the wireless communication circuit and being played through the speaker, based on determining that the hearable device is worn and identifying that the ambient sound listening function is not being performed.

The control circuit may be configured to record the audio signal acquired from the microphone, as the first function, based on determining that a type of the audio signal acquired from the microphone is voice.

The control circuit may be configured to search for the audio signal acquired from the microphone, as the first function, based on determining that a type of the audio signal acquired from the microphone is music.

The control circuit may be configured to record the audio signal being played, as the second function, based on identifying that the audio signal received from the wireless communication circuit and being played through the speaker is music.

The control circuit may be configured to add the music to a bookmark list, as the second function, based on identifying that recording of the music is not possible.

The control circuit may be configured to search for the audio signal being played, as the second function, based on identifying that the audio signal received from the wireless communication circuit and being played through the speaker is sound in a video.

According to an embodiment, a method of operating a portable electronic device (e.g., the portable electronic device 420 of FIG. 4) may include an operation (e.g., operation 510) of receiving a user input from a hearable device through a touch-sensitive display of the portable electronic device or a wireless communication circuit of the portable electronic device. The method may include an operation (e.g., operation 520) of, based on reception of the user input, determining whether the hearable device is worn, by using a detection signal received from the hearable device through the wireless communication circuit. The method may include an operation (e.g., operation 545) of performing a first function on an audio signal received from the hearable device through the wireless communication circuit, based on determining that the hearable device is not worn or based on determining that the hearable device is worn and identifying that an ambient sound listening function which outputs an audio signal acquired from a microphone of the hearable device to a speaker of the hearable device is being performed. The method may include an operation (e.g., operation 555) of performing a second function on an audio signal being played through the hearable device, based on determining that the hearable device is worn and identifying that the ambient sound listening function is not being performed.

The operation of performing the first function may include an operation of recording the audio signal received from the hearable device, based on determining that a type of the audio signal received from the hearable device through the wireless communication circuit is voice.

The operation of performing the first function may include an operation of searching for the audio signal received from the hearable device, based on determining that a type of the audio signal received from the hearable device through the wireless communication circuit is music.

The operation of performing the second function may include an operation of recording the audio signal being played, based on identifying that the audio signal being played through the hearable device is music.

The operation of performing the second function may include an operation of adding the music to a bookmark list, based on identifying that recording of the music is not possible.

The operation of performing the second function may include an operation of searching for the audio signal being played, based on identifying that the audio signal being played through the hearable device is sound in a video.

## Claims

1. A portable electronic device comprising:
a display configured to generate an input signal in response to a user's touch;
a wireless communication circuit;
a processor operatively connected to the display and the wireless communication circuit; and
a memory operatively connected to the processor,
wherein the memory stores instructions which, when executed, cause the processor to:
receive a user input from a hearable device through the display or the wireless communication circuit;
based on the receiving of the user input, determine whether the hearable device is worn, by using a detection signal received from the hearable device through the wireless communication circuit;
perform a first function on an audio signal received from the hearable device through the wireless communication circuit, based on that the hearable device is not worn or based on identifying that the hearable device is worn and an ambient sound listening function which outputs an audio signal acquired from a microphone of the hearable device to a speaker of the hearable device is being performed; and
perform a second function on an audio signal being played through the hearable device, based on identifying that the hearable device is worn and the ambient sound listening function is not being performed.

2. The portable electronic device of claim 1, wherein the instructions cause the processor to record the audio signal received from the hearable device, as the first function, based on determining that a type of the audio signal received from the hearable device through the wireless communication circuit is voice.

3. The portable electronic device of claim 1, wherein the instructions cause the processor to search for the audio signal received from the hearable device, as the first function, based on determining that a type of the audio signal received from the hearable device through the wireless communication circuit is music.

4. The portable electronic device of claim 1, wherein the instructions cause the processor to record the audio signal being played, as the second function, based on identifying that the audio signal being played through the hearable device is music.

5. The portable electronic device of claim 4, wherein the instructions cause the processor to add the music to a bookmark list, as the second function, based on identifying that recording of the music is not possible.

6. The portable electronic device of one of claims 1 to 5, wherein the instructions cause the processor to search for the audio signal being played, as the second function, based on identifying that the audio signal being played through the hearable device is sound in a video.

7. The portable electronic device of one of claims 1 to 5, wherein the instructions cause the processor to:
based on identifying that the audio signal being played through the hearable device is music, add the music to a bookmark list; and
based on identifying that the audio signal being played through the hearable device is sound in a video, add the video to the bookmark list.

8. The portable electronic device of claim 7, wherein the instructions cause the processor to:
display the bookmark list on the display; and
display, on the display, an execution screen of an application for playing music or a video selected by the user from the bookmark list.

9. A hearable device comprising:
a microphone;
a speaker;
a sensor;
an input device;
a wireless communication circuit; and
a control circuit connected to the microphone, the speaker, the sensor, the input device, and the wireless communication circuit, wherein the control circuit is configured to:
receive a user input from a portable electronic device through the input device or the wireless communication circuit;
based on the receiving of the user input, determine whether the hearable device is worn, by using a detection signal received from the sensor;
perform a first function on an audio signal acquired from the microphone, based on that the hearable device is not worn or based on identifying that the hearable device is worn and an ambient sound listening function which outputs an audio signal acquired from the microphone to the speaker is being performed; and
perform a second function on an audio signal received from the wireless communication circuit and being played through the speaker, based on identifying that the hearable device is worn and the ambient sound listening function is not being performed.

10. The hearable device of claim 9, wherein the control circuit is configured to record the audio signal acquired from the microphone, as the first function, based on determining that a type of the audio signal acquired from the microphone is voice.

11. The hearable device of claim 9, wherein the control circuit is configured to search for the audio signal acquired from the microphone, as the first function, based on determining that a type of the audio signal acquired from the microphone is music.

12. The hearable device of one of claims 9 to 11, wherein the control circuit is configured to record the audio signal being played, as the second function, based on identifying that the audio signal received from the wireless communication circuit and being played through the speaker is music.

13. The hearable device of one of claims 9 to 11, wherein the control circuit is configured to add the music to a bookmark list, as the second function, based on identifying that recording of the music is not possible.

14. The hearable device of one of claims 9 to 11, wherein the control circuit is configured to search for the audio signal being played, as the second function, based on identifying that the audio signal received from the wireless communication circuit and being played through the speaker is sound in a video.

15. A method of operating a portable electronic device, the method comprising:
receiving a user input from a hearable device through a touch-sensitive display of the portable electronic device or a wireless communication circuit of the portable electronic device;
based on the receiving of the user input, determining whether the hearable device is worn, by using a detection signal received from the hearable device through the wireless communication circuit;
performing a first function on an audio signal received from the hearable device through the wireless communication circuit, based on determining that the hearable device is not worn or based on determining that the hearable device is worn and identifying that an ambient sound listening function which outputs an audio signal acquired from a microphone of the hearable device to a speaker of the hearable device is being performed; and
performing a second function on an audio signal being played through the hearable device, based on determining that the hearable device is worn and identifying that the ambient sound listening function is not being performed.
